# EUROPÄISCHE PATENTSCHRIFT

(11) **EP 3 469 616 B1**
(45) Veröffentlichungstag und Bekanntmachung des Hinweises auf die Patenterteilung: **09.03.2022**
(21) Anmeldenummer: 17740359.9
(22) Anmeldetag: 06.07.2017
(51) Int. Cl.: H01H 35/26, H01H 33/56, H01H 11/00, H02B 13/065

(54) **ÜBERWACHUNG EINES GASDRUCKS IN EINEM GASRAUM**
MONITORING OF A GAS PRESSURE IN A GAS CHAMBER
SURVEILLANCE DE LA PRESSION D'UN GAZ DANS UN COMPARTIMENT DE GAZ

(30) Priorität: 02.08.2016 DE 102016214198
(43) Veröffentlichungstag der Anmeldung: 17.04.2019
(73) Patentinhaber: Siemens Energy Global GmbH & Co. KG, 81739 München (DE)
(72) Erfinder: KOPETSCH, Stephan, 10555 Berlin (DE); REICHERT, Frank, 06667 Weissenfels (DE); WÖLM, Torsten, 66851 Linden (DE)
(86) Internationale Anmeldenummer: PCT/EP2017/066996
(87) Internationale Veröffentlichungsnummer: WO 2018/024434

(56) Entgegenhaltungen:
- EP-A1- 1 179 727
- WO-A2-2004/027804
- DE-A1-102006 037 179

## Beschreibung

Die Erfindung betrifft eine Überwachungsvorrichtung zur Überwachung eines Gasdrucks in einem Gasraum und einen Leistungsschalter, insbesondere einen Hochspannungsleistungsschalter, mit einem Gasraum und einer derartigen Überwachungsvorrichtung.

Leistungsschalter werden häufig gekapselt mit einem Kapselungsgehäuse, das einen Gasraum umschließt, ausgeführt. In dem Gasraum ist die Unterbrechereinheit angeordnet, in der Lichtbogenkontaktelemente zwischen einer Ausschaltstellung, in der die Lichtbogenkontaktelemente voneinander getrennt sind, und einer Einschaltstellung, in der die Lichtbogenkontaktelemente galvanischen Kontakt aufweisen, relativ zueinander bewegbar sind. Der Gasraum wird mit einem Isoliergas, beispielsweise mit Schwefelhexafluorid, Stickstoff oder einem anderen geeigneten Gas, befüllt. Das Isoliergas wird zum Löschen eines Lichtbogens, der sich bei einem Ausschaltvorgang zwischen den Lichtbogenkontaktelementen bildet, verwendet. Zum Löschen des Lichtbogens ist ein ausreichender Gasdruck in dem Gasraum erforderlich. Daher wird der Gasdruck in dem Gasraum überwacht.

Der Erfindung liegt die Aufgabe zugrunde, eine verbesserte Überwachungsvorrichtung zur Überwachung eines Gasdrucks in einem Gasraum eines Leistungsschalters anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Eine erfindungsgemäße Überwachungsvorrichtung zur Überwachung eines Gasdrucks in einem Gasraum umfasst eine Messvorrichtung und eine Rohrleitung. Die Messvorrichtung weist ein Referenzgasvolumen und eine Sensoreinheit zur Erfassung eines Referenzgasdrucks in dem Referenzgasvolumen auf. Die Rohrleitung verbindet das Referenzgasvolumen mit dem Gasraum und weist einen Druckschwingungsdämpfer zur Dämpfung von Druckschwingungen in dem Referenzgasvolumen auf.

Durch die Verbindung des Gasraums mit dem Referenzgasvolumen über die Rohrleitung ist der Referenzgasdruck in dem Referenzgasvolumen ein Maß für den Gasdruck in dem Gasraum. Über das Gas in der Rohrleitung werden auch Druckschwingungen des Gasdrucks in dem Gasraum in das Referenzgasvolumen übertragen. Im Falle, dass in dem Gasraum beispielsweise die Unterbrechereinheit einschließlich der Lichtbogenkontaktelemente eines Leistungsschalters angeordnet ist, können Druckschwingungen in dem Gasraum z. B. durch Bewegungen beweglicher Teile innerhalb der Unterbrechereinheit, insbesondere durch Schalthandlungen der Lichtbogenkontaktelemente, und/oder durch einen zwischen den Lichtbogenkontaktelementen brennenden Lichtbogen entstehen. Derartige Druckschwingungen des Referenzgasdrucks sind jedoch unkritisch, solange der Mittelwert des Referenzgasdrucks in einem Sollbereich verbleibt. Um der Übertragung von Druckschwingungen in dem Gasraum in das Referenzgasvolumen entgegenzuwirken, weist die Rohrleitung einen Druckschwingungsdämpfer zur Dämpfung von Druckschwingungen in dem Referenzgasvolumen auf.

Eine Ausgestaltung der Erfindung sieht vor, dass der Druckschwingungsdämpfer einen Gasbehälter und ein Rohr der Rohrleitung aufweist, wobei das Rohr durch den Gasbehälter verläuft und innerhalb des Gasbehälters mehrere Rohrwandöffnungen aufweist. Durch die Rohrwandöffnungen strömt Gas aus dem Rohr in den das Rohr umgebenden Bereich des von dem Gasbehälter eingeschlossenen Hohlraums. Diese Gasströmung entzieht den Druckschwingungen Energie, die durch die Wechselwirkung der Gasmoleküle in Wärme umgesetzt wird. Der Energieverlust dämpft vorteilhaft die Druckschwingungen in der Rohrleitung, so dass nur gedämpfte Druckschwingungen in das Referenzgasvolumen übertragen werden.

Eine weitere Ausgestaltung der Erfindung sieht vor, dass die Rohrwandöffnungen mehrere entlang einer durch das Rohr verlaufenden Rohrachse voneinander beabstandete Rohrwandöffnungsgruppen bilden, wobei jede Rohrwandöffnungsgruppe mehrere in einer zu der Rohrachse senkrechten Ebene angeordnete Rohrwandöffnungen aufweist. Vorzugsweise sind die Rohrwandöffnungen jeder Rohrwandöffnungsgruppe dabei gleichmäßig entlang eines Rohrumfangs des Rohrs verteilt. Ferner weist jede Rohrwandöffnungsgruppe vorzugsweise genau vier Rohrwandöffnungen auf. Derartige Anordnungen der Rohrwandöffnungen haben sich für die Dämpfung von Druckschwingungen als besonders günstig erwiesen.

Eine weitere Ausgestaltung der Erfindung sieht vor, dass das Rohr gasdicht durch eine Behälterwand des Gasbehälters, beispielsweise durch zwei sich gegenüber liegende Endbereiche der Behälterwand des Gasbehälters, geführt ist. Die beiden Endbereiche der Behälterwand sind beispielsweise durch einen Mantelbereich der Behälterwand, der das Rohr zwischen den beiden Endbereichen der Behälterwand umgibt und z. B. als ein Hohlzylinder gestaltet ist, miteinander verbunden. Die gasdichte Durchführung des Rohrs durch die Behälterwand des Gasbehälters verhindert vorteilhaft ein Entweichen von Gas aus dem Gasbehälter und einen dadurch verursachten Druckverlust. Eine hohlzylindrische Gestaltung der Behälterwand um das Rohr herum hat sich als zweckmäßig für die Dämpfung von Druckschwingungen erwiesen.

Eine weitere Ausgestaltung der Erfindung sieht vor, dass die Messvorrichtung eine Anzeigeeinheit zum Signalisieren des Unterschreitens eines Gasdruckschwellenwertes in dem Referenzgasvolumen aufweist. Beispielsweise weist die Anzeigeeinheit dafür ein Fallklappenrelais auf. Diese Ausgestaltung der Erfindung zielt auf die Überwachung eines Gasraums, in dem der Gasdruck nicht unter einen Gasdruckschwellenwert fallen darf, wie beispielsweise in dem oben bereits genannten Fall eines Gasraums eines Leistungsschalters. In derartigen Anwendungen hat sich die Dämpfung von Druckschwingungen insbesondere als vorteilhaft erwiesen, wenn die Anzeigeeinheit ein Fallklappenrelais aufweist, da sich gezeigt hat, dass ein Fallklappenrelais besonders leicht unerwünscht auf Druckschwingungen anspricht.

Ein erfindungsgemäßer Leistungsschalter weist einen Gasraum und eine erfindungsgemäße Überwachungsvorrichtung zur Überwachung eines Gasdrucks in dem Gasraum mit den oben genannten Vorteilen auf. Dabei verbindet die Rohrleitung der Überwachungsvorrichtung das Referenzgasvolumen der Überwachungsvorrichtung mit dem Gasraum des Leistungsschalters.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine schematische Darstellung einer Überwachungsvorrichtung zur Überwachung eines Gasdrucks in einem Gasraum,
- FIG 2: zeitliche Druckverläufe eines Referenzgasdrucks, und
- FIG 3: eine schematische Darstellung eines Leistungsschalters.

Einander entsprechende Teile sind in den Figuren mit den gleichen Bezugszeichen versehen.

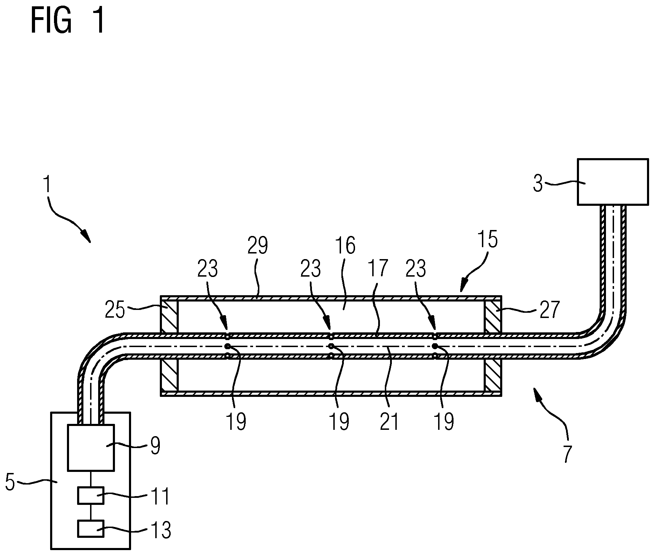

Figur 1 zeigt eine schematische Darstellung einer Überwachungsvorrichtung 1 zur Überwachung eines Gasdrucks in einem Gasraum 3. Die Überwachungsvorrichtung 1 umfasst eine Messvorrichtung 5 und eine Rohrleitung 7. Die Messvorrichtung 5 ist in Figur 1 nur schematisch dargestellt, die Rohrleitung 7 ist geschnitten darstellt.

Die Messvorrichtung 5 weist ein Referenzgasvolumen 9, eine Sensoreinheit 11 zur Erfassung eines Referenzgasdrucks P in dem Referenzgasvolumen 9 und eine Anzeigeeinheit 13 zum Signalisieren des Unterschreitens eines vorgegebenen Gasdruckschwellenwertes in dem Referenzgasvolumen 9 auf.

Die Rohrleitung 7 verbindet das Referenzgasvolumen 9 mit dem Gasraum 3, so dass der Referenzgasdruck P in dem Referenzgasvolumen 9 ein Maß für den Gasdruck in dem Gasraum 3 ist.

Über das Gas in der Rohrleitung 7 werden auch Druckschwingungen des Gasdrucks in dem Gasraum 3 auf das Gas in dem Referenzgasvolumen 9 übertragen. Im Falle, dass in dem Gasraum 3 beispielsweise die Unterbrechereinheit einschließlich der Lichtbogenkontaktelemente eines Leistungsschalters 35 angeordnet ist, können Druckschwingungen in dem Gasraum 3 z. B. durch Bewegungen beweglicher Teile innerhalb der Unterbrechereinheit, insbesondere durch Schalthandlungen der Lichtbogenkontaktelemente, und/oder durch einen zwischen den Lichtbogenkontaktelementen brennenden Lichtbogen entstehen. Druckschwingungen des Referenzgasdrucks P in dem Referenzgasvolumen 9 können zum unerwünschten Ansprechen der Anzeigeeinheit 13 der Messvorrichtung 5 führen, da Druckschwingungen mit einer großen Schwingungsamplitude ein kurzzeitiges Unterschreiten des Gasdruckschwellenwerts bewirken können, das von der Anzeigeeinheit 13 signalisiert wird, auch wenn der Mittelwert des Referenzgasdrucks P den Gasdruckschwellenwert nicht unterschreitet und daher unkritisch ist. Ein derartiges unerwünschtes Ansprechen der Anzeigeeinheit 13 wurde beispielsweise in dem Fall festgestellt, dass die Anzeigeeinheit 13 ein Fallklappenrelais aufweist, welches durch Unterschreiten eines Gasdruckschwellenwerts ausgelöst wird.

Um einem durch Druckschwingungen verursachten unerwünschten Ansprechen der Anzeigeeinheit 13 entgegenzuwirken, weist die Rohrleitung 7 einen Druckschwingungsdämpfer 15 zur Dämpfung von Druckschwingungen in dem Referenzgasvolumen 9 auf.

Der Druckschwingungsdämpfer 15 weist einen Gasbehälter 16 und ein Rohr 17 der Rohrleitung 7 auf, wobei das Rohr 17 durch den Gasbehälter 16 verläuft und innerhalb des Gasbehälters 16 mehrere Rohrwandöffnungen 19 aufweist. Durch die Rohrwandöffnungen 19 strömt Gas aus dem Rohr 17 in den das Rohr 17 umgebenden Bereich des von dem Gasbehälter 16 eingeschlossenen Hohlraums. Diese Gasströmung entzieht den Druckschwingungen Energie, die durch die Wechselwirkung der Gasmoleküle in Wärme umgesetzt wird. Der Energieverlust dämpft die Druckschwingungen, so dass ein durch Druckschwingungen verursachtes unerwünschtes Ansprechen der Anzeigeeinheit 13 vermieden oder zumindest deutlich reduziert wird. Die Rohrwandöffnungen 19 haben vorzugsweise kleine Durchmesser, um hohe Strömungsgeschwindigkeiten des durch die Rohrwandöffnungen 19 strömenden Gases zu bewirken, die zu Turbulenzen führen und den Energieverlust der Druckschwingungen und damit die Dämpfungswirkung des Druckschwingungsdämpfers 15 erhöhen.

Die Rohrwandöffnungen 19 bilden mehrere (in dem in Figur 1 gezeigten Ausführungsbeispiel drei) entlang einer durch das Rohr 17 verlaufenden Rohrachse 21 voneinander beabstandete Rohrwandöffnungsgruppen 23. Jede Rohrwandöffnungsgruppe 23 weist vier in einer zu der Rohrachse 21 senkrechten Ebene angeordnete Rohrwandöffnungen 19 auf, die gleichmäßig entlang eines Rohrumfangs des Rohrs 17 verteilt sind. Diese Anordnung der Rohrwandöffnungen 19 hat sich als für die Dämpfung von Druckschwingungen besonders günstig erwiesen.

Das Rohr 17 ist gasdicht durch zwei sich gegenüber liegende Endbereiche 25, 27 der Behälterwand des Gasbehälters 16 geführt. Die beiden Endbereiche 25, 27 der Behälterwand sind durch einen Mantelbereich 29 der Behälterwand miteinander verbunden. Der Mantelbereich 29 ist als ein Hohlzylinder gestaltet, der das Rohr 17 zwischen den beiden Endbereichen 25, 27 der Behälterwand umgibt. Beispielsweise ist der Hohlzylinder als hohler Kreiszylinder oder als ein hohles Prisma ausgebildet.

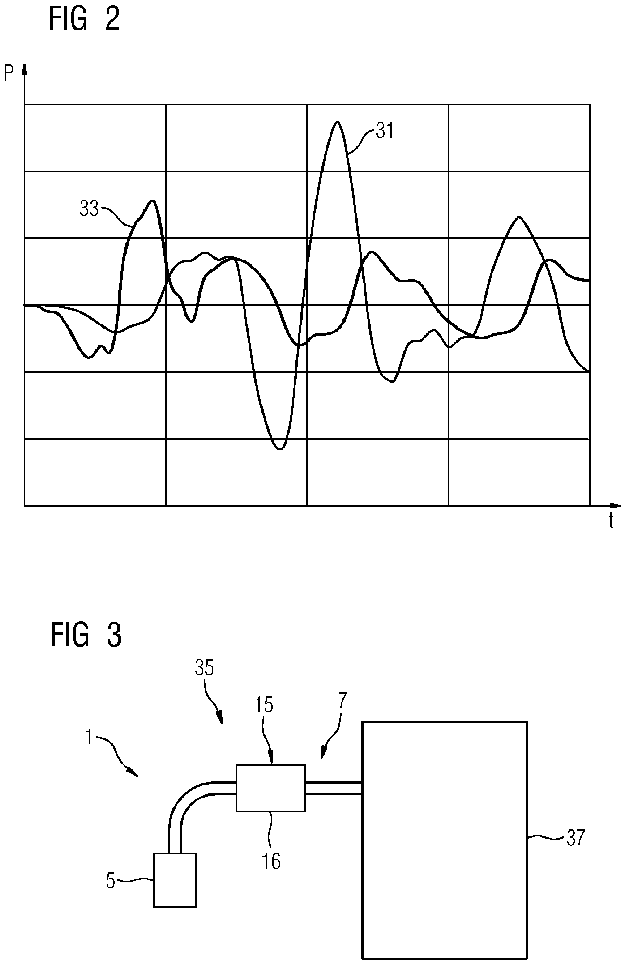

Figur 2 zeigt zwei simulierte Druckverläufe 31, 33 eines Referenzgasdrucks P in einem Referenzgasvolumen 9 in Abhängigkeit von einer Zeit t bei jeweils gleichen in dem Gasraum 3 erzeugten Druckschwingungen. Dabei zeigt ein erster Druckverlauf 31 den zeitlichen Verlauf des Referenzgasdrucks P, wenn die Rohrleitung 7 keinen Druckschwingungsdämpfer 15 aufweist, die Überwachungsvorrichtung 1 abgesehen davon jedoch wie in Figur 1 ausgebildet ist. Der zweite Druckverlauf 33 zeigt den zeitlichen Verlauf des Referenzgasdrucks P für die in Figur 1 dargestellte Überwachungsvorrichtung 1. Der zweite Druckverlauf 33 weist gegenüber dem ersten Druckverlauf 31 deutlich reduzierte Schwingungsamplituden des Referenzgasdrucks P auf, die auf die Dämpfungswirkung des Druckschwingungsdämpfers 15 zurückgehen.

Figur 3 zeigt eine schematische Darstellung eines Leistungsschalters 35. Der Leistungsschalter 35 weist ein Kapselungsgehäuse 37, das einen Gasraum 3 umschließt, und eine wie in Figur 1 ausgebildete Überwachungsvorrichtung 1 zur Überwachung eines Gasdrucks in dem Gasraum 3 auf. Die Rohrleitung 7 der Überwachungsvorrichtung 1 verbindet das Referenzgasvolumen 9 der Überwachungsvorrichtung 1 mit dem Gasraum 3 des Leistungsschalters 35.

## Patentansprüche

1. Überwachungsvorrichtung (1) zur Überwachung eines Gasdrucks in einem Gasraum (3) eines Leistungsschalters, die Überwachungsvorrichtung (1) umfassend
- eine Messvorrichtung (5) mit einem Referenzgasvolumen (9) und einer Sensoreinheit (11) zur Erfassung eines Referenzgasdrucks (P) in dem Referenzgasvolumen (9) **gekennzeichnet durch**
- eine Rohrleitung (7), die das Referenzgasvolumen (9) mit dem Gasraum (3) verbindet,
- wobei die Rohrleitung (7) einen Druckschwingungsdämpfer (15) zur Dämpfung von Druckschwingungen in dem Referenzgasvolumen (9) aufweist.

2. Überwachungsvorrichtung (1) nach Anspruch 1,
**dadurch gekennzeichnet**, das s der Druckschwingungsdämpfer (15) einen Gasbehälter (16) und ein Rohr (17) der Rohrleitung (7) aufweist, wobei das Rohr (17) durch den Gasbehälter (16) verläuft und innerhalb des Gasbehälters (16) mehrere Rohrwandöffnungen (19) aufweist.

3. Überwachungsvorrichtung (1) nach Anspruch 2, **dadurch gekennzeichnet,** das s die Rohrwandöffnungen (19) mehrere entlang einer durch das Rohr (17) verlaufenden Rohrachse (21) voneinander beabstandete Rohrwandöffnungsgruppen (23) bilden, wobei jede Rohrwandöffnungsgruppe (23) mehrere in einer zu der Rohrachse (21) senkrechten Ebene angeordnete Rohrwandöffnungen (19) aufweist.

4. Überwachungsvorrichtung (1) nach Anspruch 3,
**dadurc hgekennzeichnet**, das s die Rohrwandöffnungen (19) jeder Rohrwandöffnungsgruppe (23) gleichmäßig entlang eines Rohrumfangs des Rohrs (17) verteilt sind.

5. Überwachungsvorrichtung (1) nach Anspruch 3 oder 4,
**dadurch gekennzeichnet,** das s jede Rohrwandöffnungsgruppe (23) genau vier Rohrwandöffnungen (19) aufweist.

6. Überwachungsvorrichtung (1) nach einem der Ansprüche 2 bis 5,
**dadurch gekennzeichnet**, das s das Rohr (17) gasdicht durch eine Behälterwand des Gasbehälters (16) geführt ist.

7. Überwachungsvorrichtung (1) nach einem der Ansprüche 2 bis 6,
**dadurch gekennzeichnet**, das s das Rohr (17) durch zwei sich gegenüber liegende Endbereiche (25, 27) der Behälterwand des Gasbehälters (16) geführt ist.

8. Überwachungsvorrichtung (1) nach Anspruch 7,
**dadurch gekennzeichnet,** das s die beiden Endbereiche (25, 27) der Behälterwand durch einen Mantelbereich (29) der Behälterwand, der das Rohr (17) zwischen den beiden Endbereichen (25, 27) der Behälterwand umgibt, miteinander verbunden sind.

9. Überwachungsvorrichtung (1) nach Anspruch 8,
**dadurch gekennzeichnet,** das s der Mantelbereich (29) der Behälterwand als ein Hohlzylinder gestaltet ist.

10. Überwachungsvorrichtung (1) nach einem der vorhergehenden Ansprüche,
**dadurch gekennzeichnet,** das s die Messvorrichtung (5) eine Anzeigeeinheit (13) zum Signalisieren des Unterschreitens eines Gasdruckschwellenwertes in dem Referenzgasvolumen (9) aufweist.

11. Überwachungsvorrichtung (1) nach Anspruch 10,
**dadurch gekennzeichnet**, das s
die Anzeigeeinheit (13) ein Fallklappenrelais aufweist.

12. Leistungsschalter (35) mit einem Gasraum (3) und einer gemäß einem der vorhergehenden Ansprüche ausgebildeten Überwachungsvorrichtung (1) zur Überwachung eines Gasdrucks in dem Gasraum (3), wobei die Rohrleitung (7) der Überwachungsvorrichtung (1) das Referenzgasvolumen (9) der Messvorrichtung (5) der Überwachungsvorrichtung (1) mit dem Gasraum (3) des Leistungsschalters (35) verbindet.

## Claims

1. Monitoring device (1) for monitoring a gas pressure in a gas chamber (3) of a circuit breaker, the monitoring device (1) comprising
- a measuring device (5) with a reference gas volume (9) and a sensor unit (11) for sensing a reference gas pressure (P) in the reference gas volume (9), **characterized by**
- a pipeline (7), which connects the reference gas volume (9) to the gas chamber (3),
- wherein the pipeline (7) has a pulsation damper (15) for damping pulsations in the reference gas volume (9).

2. Monitoring device (1) according to Claim 1,
**characterized in that** the pulsation damper (15) has a gas container (16) and a pipe (17) of the pipeline (7), wherein the pipe (17) runs through the gas container (16) and has a number of pipe wall openings (19) within the gas container (16) .

3. Monitoring device (1) according to Claim 2,
**characterized in that** the pipe wall openings (19) form a number of pipe-wall opening groups (23) that are spaced apart from one another along a pipe axis (21) running through the pipe (17), wherein each pipe-wall opening group (23) has a number of pipe wall openings (19) arranged in a plane perpendicular to the pipe axis (21).

4. Monitoring device (1) according to Claim 3,
**characterized in that** the pipe wall openings (19) of each pipe-wall opening group (23) are evenly distributed along a pipe circumference of the pipe (17).

5. Monitoring device (1) according to Claim 3 or 4, **characterized in that** each pipe-wall opening group (23) has exactly four pipe wall openings (19).

6. Monitoring device (1) according to one of Claims 2 to 4, **characterized in that** the pipe (17) is made to pass through a container wall of the gas container (16) in a gas-tight manner.

7. Monitoring device (1) according to one of Claims 2 to 6, **characterized in that** the pipe (17) is made to pass through two opposite end regions (25, 27) of the container wall of the gas container (16).

8. Monitoring device (1) according to Claim 7,
**characterized in that** the two end regions (25, 27) of the container wall are connected to one another by a casing region (29) of the container wall that surrounds the pipe (17) between the two end regions (25, 27) of the container wall.

9. Monitoring device (1) according to Claim 8,
**characterized in that** the casing region (29) of the container wall is designed as a hollow cylinder.

10. Monitoring device (1) according to one of the preceding claims,
**characterized in that** the measuring device (5) has a display unit (13) for signalling when the gas pressure in the reference gas volume (9) goes below a gas-pressure threshold value.

11. Monitoring device (1) according to Claim 10,
**characterized in that** the display unit (13) has a drop indicator relay.

12. Circuit breaker (35) with a gas chamber (3) and a monitoring device (1) designed according to one of the preceding claims for monitoring a gas pressure in the gas chamber (3), wherein the pipeline (7) of the monitoring device (1) connects the reference gas volume (9) of the measuring device (5) of the monitoring device (1) to the gas chamber (3) of the circuit breaker (35).

## Revendications

1. Système (1) de contrôle de la pression d'un gaz dans un espace (3) pour du gaz d'un disjoncteur, le système (1) de contrôle comprenant
- un système (5) de mesure ayant un volume (9) de gaz de référence et une unité (11) de capteur pour le relevé d'une pression (P) de gaz de référence dans le volume (9) de gaz de référence, **caractérisé par**
- une canalisation (7), qui met le volume (9) de gaz de référence en communication avec l'espace (3) pour du gaz,
- dans lequel la canalisation (7) a un amortisseur (15) d'oscillations de pression pour l'amortissement d'oscillations de pression dans le volume (9) de gaz de référence.

2. Système (1) de contrôle suivant la revendication 1, **caractérisé en ce que**
l'amortisseur (15) d'oscillations de pression a un récipient (16) à gaz et un tuyau (17) de la canalisation (7), dans lequel le tuyau (17) passe dans le récipient (16) à gaz et a, à l'intérieur du récipient (16) à gaz, plusieurs ouvertures (19) de paroi de tuyau.

3. Système (1) de contrôle suivant la revendication 2, **caractérisé en ce que**
les ouvertures (19) de paroi de tuyau forment plusieurs groupes (23) d'ouvertures de tuyau à distance les uns des autres, suivant l'axe (21) du tuyau s'étendant dans le tuyau (17), chaque groupe (23) d'ouvertures de paroi de tuyau ayant plusieurs ouvertures (19) de paroi de tuyau disposées dans un plan perpendiculaire à l'axe (21) du tuyau.

4. Système (1) de contrôle suivant la revendication 3, **caractérisé en ce que**
les ouvertures (19) de paroi du tuyau de chaque groupe (23) d'ouvertures de paroi du tuyau sont réparties uniformément sur le pourtour du tuyau (17).

5. Système (1) de contrôle suivant la revendication 3 ou 4, **caractérisé en ce que** chaque groupe (23) d'ouvertures de paroi du tuyau a exactement quatre ouvertures (19) de paroi du tuyau.

6. Système (1) de contrôle suivant l'une des revendications 2 à 5,
**caractérisé en ce que**
le tuyau (17) passe d'une manière étanche au gaz à travers une paroi du récipient (16) à gaz.

7. Système (1) de contrôle suivant l'une des revendications 2 à 6,
**caractérisé en ce que**
le tuyau (17) passe dans deux parties (25, 27) d'extrémité se faisant face de la paroi du récipient (16) à gaz.

8. Système (1) de contrôle suivant la revendication 7, **caractérisé en ce que**
les deux parties (25, 27) d'extrémité de la paroi du récipient sont reliées par une partie (29) de surface latérale de la paroi du récipient, qui entoure le tuyau (17) entre les deux parties (25, 27) d'extrémité de la paroi du récipient.

9. Système (1) de contrôle suivant la revendication 8, **caractérisé en ce que**
la partie (29) de surface latérale de la paroi du récipient est conformée sous la forme d'un cylindre creux.

10. Système (1) de contrôle suivant l'une des revendications précédentes,
**caractérisé en ce que**
le système (5) de mesure a une unité (13) d'enfichage pour signaler le passage en dessous d'une valeur de seuil de pression du gaz dans le volume (9) de gaz de référence.

11. Système (1) de contrôle suivant la revendication 10, **caractérisé en ce que**
l'unité (13) d'affichage a un relais avertisseur à volet.

12. Disjoncteur (35) comprenant un espace (3) pour du gaz et un système (1) de contrôle constitué suivant l'une des revendications précédentes pour le contrôle d'une pression du gaz dans l'espace (3) pour du gaz, la canalisation (7) du système (1) de contrôle mettant le volume (9) de référence du système (5) de mesure du système (1) de contrôle en communication avec l'espace (3) pour du gaz du disjoncteur (35).
